# EUROPÄISCHE PATENTSCHRIFT

(11) **EP 3 706 099 B1**
(45) Veröffentlichungstag und Bekanntmachung des Hinweises auf die Patenterteilung: **13.12.2023**
(21) Anmeldenummer: 20157850.7
(22) Anmeldetag: 18.02.2020
(51) Int. Cl.: G08G 5/00, G06F 3/16

(54) **VERFAHREN ZUR ERKENNUNG UND WIEDERGABE VON EINER MEHRZAHL VON SENDERN ÜBER FUNK ABGEGEBENEN SPRECHFUNKMELDUNGEN SOWIE VORRICHTUNG HIERZU**
METHOD FOR THE DETECTION AND REPRODUCTION OF A PLURALITY OF TRANSMITTERS VIA WIRELESS RADIO SIGNALS, AND DEVICE FOR SAME
PROCÉDÉ DE DÉTECTION ET DE LECTURE D'UNE PLURALITÉ D'ÉMETTEURS À L'AIDE DES MESSAGES DE RADIOTÉLÉPHONIE TRANSFÉRÉS PAR RADIO AINSI QUE DISPOSITIF ASSOCIÉ

(30) Priorität: 08.03.2019 AT 501932019
(43) Veröffentlichungstag der Anmeldung: 09.09.2020
(73) Patentinhaber: Frequentis AG, 1100 Wien (AT)
(72) Erfinder: Aster, Robert, 1230 Wien (AT)
(74) Vertreter: Wildhack & Jellinek Patentanwälte

(56) Entgegenhaltungen:
- WO-A2-2015/145138
- US-B1- 7 606 536
- US-B1- 10 001 966

## Beschreibung

Die Erfindung betrifft ein Verfahren zur Erkennung und Wiedergabe von einer Mehrzahl von Sendern über Funk abgegebenen Sprechfunkmeldungen an einem Fluglotsenarbeitsplatz gemäß Patentanspruch 1 und ein Sprechübertragungssystem gemäß Patentanspruch 7.

Speziell im Bereich der Flugsicherung kann es zu Situationen kommen, in denen beispielsweise zwei Luftfahrzeuge oder ein Luftfahrzeug und ein Controller bzw. Fluglotse gleichzeitig über Funk sprechen bzw. senden. Dies wird als simultaneous radio transmission (SiT) bezeichnet, d.h. ein Empfangen mehrerer zeitlich überlappender Nachrichten über mehrere Sende-/Empfangsanlagen die zum selben Funkkanal oder auch zu unterschiedlichen Funkkanälen gehören können.

Die US 10001966 B1 offenbart ein audio sequencing device, das Audiosignale von unterschiedlichen Quellen empfangen und den Audiosignalen Prioritäten zuordnen kann. Die Audiosignale werden basierend auf z.B. der ihnen jeweils zugeordneten Priorität gereiht und entsprechend deren Reihung und Priorität einzeln an den Benutzer abgegeben.

Die US 7606536 B1 offenbart eine Vorrichtung und ein Verfahren für einen Transmitter, der sich nahe an einem empfindlichen Receiver befindet. Dabei kann eine (Sprach-)Aussendung auf einer Frequenz verzögert werden, solange auf einer - im speziellen benachbarten Frequenz - noch ein Empfang vorliegt.

Aus dem Stand der Technik ist es bekannt, dass dem Fluglotsen visuell oder akustisch angezeigt wird, wenn eine derartige simultaneous radio transmission erkannt wird, d.h. wenn zumindest zwei Luftfahrzeugen oder zumindest ein Luftfahrzeug und der Fluglotse gleichzeitig sprechen. Die zeitlich spätere Sprechfunkmeldung der betroffenen Sende-/Empfangsanlage wird in diesem Fall zum ursprünglichen Gespräch dazugemixt.

Nachteil bei einer derartigen bekannten Vorgehensweise ist, dass der Fluglotse zwar erkennen kann, dass es sich um zwei verschiedene, einander zeitlich überlagernde, Gespräche handelt, der Fluglotse diese aber akustisch nicht oder nur schwer verstehen bzw. auseinanderhalten kann.

Aufgabe der Erfindung ist es daher, ein Verfahren und eine Vorrichtung zur Verfügung zu stellen, die es einem Fluglotsen ermöglichen, mehrere einander zeitlich überlagernde Sprechfunkmeldungen auseinanderzuhalten und jeweils vollständig zu erfassen und gleichzeitig die Sender von Sprechnachrichten darüber zu informieren, dass am Fluglotsenarbeitsplatz aktuell bereits eine Sprechfunkmeldung abgegeben wird.

Die Erfindung löst diese Aufgabe bei einem Verfahren zur Erkennung und Wiedergabe von einer Mehrzahl von Sendern über Funk abgegebenen Sprechfunkmeldungen an einem Fluglotsenarbeitsplatz wobei untersucht wird, ob einander mehrere am Fluglotsenarbeitsplatz einlangende Sprechfunkmeldungen zeitlich überlagern, und in diesem Fall
- eine der Sprechfunkmeldungen priorisiert und unmittelbar am Fluglotsenarbeitsplatz abgegeben wird,
- die zumindest eine andere Sprechfunkmeldung zwischengespeichert wird, und

- die zumindest eine zwischengespeicherte Sprechfunkmeldung nach dem Ende der priorisierten Sprechfunkmeldung am Fluglotsenarbeitsplatz abgegeben wird,
mit den kennzeichnenden Merkmalen von Patentanspruch 1.

Erfindungsgemäß ist dabei vorgesehen, dass während des Zeitraums nach dem Ende der priorisierten und/oder aller überlagert einlangenden Sprechfunkmeldungen eine Sprechnachricht an alle Sender übermittelt wird, die zumindest so lange andauert, bis die zumindest eine zwischengespeicherte Sprechfunkmeldung am Fluglotsenarbeitsplatz abgegeben ist.

Durch eine derartige Vorgehensweise ist vorteilhafterweise sichergestellt, dass, sobald eine simultaneous radio transmission, d.h. eine zeitliche Überlagerung mehrerer, am Fluglotsenarbeitsplatz einlangender, Sprechfunkmeldungen detektiert wird, eine der einlangenden Sprechfunkmeldungen priorisiert und die jeweils zumindest eine andere nicht zum Fluglotsen durchgestellt, sondern zwischengespeichert wird. Sobald die priorisierte Sprechfunkmeldung abgegeben ist, wird die zwischengespeicherte Sprechfunkmeldung am Fluglotsenarbeitsplatz abgegeben. Auf diese Weise ist es dem Fluglotsen möglich, mehrere, einander zeitlich überlagernde, Gespräche auseinanderzuhalten und jeweils getrennt voneinander zu erfassen, da er die Sprechfunkmeldungen zeitlich versetzt hört.

Weiters wird so vermieden, dass während des Zeitraums, in dem die zwischengespeicherte Sprechfunkmeldung abgegeben wird, weitere Sprechfunkmeldungen zeitgleich einlangen. Weiters kann so vorteilhafterweise sichergestellt werden, dass die Luftfahrzeuge bzw. Sender darüber informiert sind, dass der Fluglotse aktuell bereits eine andere Sprechfunkmeldung hört bzw. am Fluglotsenarbeitsplatz eine andere Sprechfunkmeldung abgegeben wird.

Eine besonders einfache Vorgehensweise zur Priorisierung kann bereitgestellt werden, wenn diejenige Sprechfunkmeldung, deren Beginn zeitlich früher liegt, priorisiert wird und die zumindest eine jeweils später beginnende Sprechfunkmeldung zwischengespeichert wird.

Gemäß einer Variante eines erfindungsgemäßen Verfahrens kann vorgesehen sein, dass eine automatisch generierte Sprechnachricht an alle Sender übermittelt wird.

Um den Fluglotsen das Verständnis der aktuellen Situation zu erleichtern bzw. darauf hinzuweisen, dass eine simultaneous radio transmission detektiert wurde, kann vorgesehen sein, dass am Fluglotsenarbeitsplatz vor dem Abspielen der zumindest einen zwischengespeicherten Sprechfunkmeldung eine Warnmeldung abgegeben wird, die auf das zeitlich überlagerte Einlangen der Sprechfunkmeldungen hinweist.

Auf diese Weise kann sichergestellt werden, dass der Fluglotse informiert ist, dass die zwischengespeicherte Sprechfunkmeldung zeitlich überlappend mit der bereits abgegebenen priorisierten Sprechfunkmeldung eingelangt ist.

Um sicherzustellen, dass der Fluglotse jederzeit die Abgabe einer priorisierten oder zwischengespeicherten Sprechfunkmeldung unterbrechen kann bzw. selbst Sprechfunkmeldungen abgeben kann, kann vorgesehen sein, dass das Abspielen der zumindest einen zwischengespeicherten Sprechfunkmeldung und/oder die Sprechnachricht unterbrochen werden, wenn am Fluglotsenarbeitsplatz ein Push-To-Talk-Button betätigt wird.

So kann vorteilhafterweise der Fluglotse jederzeit aktiv Sprechfunkmeldungen abgeben, um auf die jeweilige Situation reagieren zu können bzw. Handlungen im Nachgang zu oder während abgegebener Sprechfunkmeldungen zu setzen.

Um die Qualität mehrerer am Fluglotsenarbeitsplatz einlangender, einander zeitlich überlagernder, Sprechfunkmeldungen zu verbessern, kann vorgesehen sein, dass, sofern an den einzelnen Sende-/Empfangsanlagen einlangende voneinander unterschiedliche Sprechfunkmeldungen einander zeitlich überlagern,
- für jede einzelne einlangende Sprechfunkmeldung jeweils diejenige Sende-/Empfangsanlage ermittelt wird, an der die einlangende Sprechfunkmeldung unüberlagert oder mit der besten Qualität empfangen wird und
- jeweils die über die derart ermittelte Sende-/Empfangsanlage unüberlagert empfangene Sprechfunkmeldung an den Lotsenarbeitsplatz weitergeleitet und/oder in einem Zwischenspeicher zwischengespeichert wird.

Somit kann vorteilhafterweise sichergestellt werden, dass für jede einzelne einlangende Sprechfunkmeldung diejenige Sende-/Empfangsanlage ausgewählt wird, an der entweder nur diese Sprechfunkmeldung einlangt, d.h. die Sprechfunkmeldung nicht mit anderen Sprechfunkmeldungen überlagert ist, oder die Sprechfunkmeldung in der im Vergleich zu den anderen Sende-/Empfangsanlagen besten Qualität empfangen wird und jeweils nur die an dieser identifizierten Sende-/Empfangsanlage einlangende Sprechfunkmeldung dem Fluglotsen zur Erkenntnis gebracht oder zwischengespeichert wird.

Die Erfindung betrifft weiters ein Sprechübertragungssystem gemäß Patentanspruch 7. Das Sprechübertragungssystem umfasst dabei
- eine Anzahl von Sende-/Empfangsanlagen, die an einen gemeinsamen Lotsenarbeitsplatz angeschlossen sind, wobei der Lotsenarbeitsplatz zumindest einen Lautsprecher zur Abgabe von Sprechfunkmeldungen aufweist, und
- eine Steuer- und Verarbeitungseinheit, die zwischen die Sende-/Empfangsanlagen und den Fluglotsenarbeitsplatz geschaltet ist, umfassend einen Zwischenspeicher zum Abspeichern von Sprechfunkmeldungen, wobei die Steuer- und Verarbeitungseinheit dazu ausgebildet ist,
   - festzustellen, ob über die einzelnen Sende-/Empfangsanlagen einlangende voneinander unterschiedliche Sprechfunkmeldungen einander zeitlich überlagern, und sofern ein zeitliches Überlagern mehrerer Sprechfunkmeldungen festgestellt wird,
      - eine der Sende-/Empfangsanlagen zu priorisieren, und die jeweilige Sprechfunkmeldung unmittelbar an den Fluglotsenarbeitsplatz weiterzuleiten und über den Lautsprecher abzugeben,
      - die zumindest eine nicht an den Fluglotsenarbeitsplatz weitergeleitete Sprechfunkmeldung im Zwischenspeicher zwischenzuspeichern und
   - die zumindest eine zwischengespeicherte Sprechfunkmeldung nach dem Ende der priorisierten Sprechfunkmeldung über den Lautsprecher am Fluglotsenarbeitsplatz abzugeben.

Erfindungsgemäß ist dabei vorgesehen, dass die Steuer- und Verarbeitungseinheit dazu ausgebildet ist, während des Zeitraums nach dem Ende der priorisierten und/oder aller überlagert einlangenden Sprechfunkmeldungen über die Sende-/Empfangsanlagen eine Sprechnachricht an die Sendeanlagen zu übermittelten, wobei die Sprechnachricht zumindest so lange andauert, bis die zumindest eine zwischengespeicherte Sprechfunkmeldung abgegeben ist.

Mit einem derartig ausgestalteten Sprechübertragungssystem ist es vorteilhafterweise möglich, dass am Fluglotsenarbeitsplatz einander zeitlich überlagernde Sprechfunkmeldungen hintereinander, d.h. zeitlich versetzt, abgegeben werden, sodass der Fluglotse einander zeitlich überlagernde Sprechfunkmeldungen auseinanderhalten und jeweils vollständig erfassen kann.

Durch diese Ausgestaltung eines erfindungsgemäßen Sprechübertragungssystems kann vermieden werden, dass weitere Sprechfunkmeldungen abgegeben werden, während eine zwischengespeicherte Sprechfunkmeldung am Fluglotsenarbeitsplatz abgespielt wird.

Eine besonders einfache Art der Priorisierung einer Sprechfunkmeldung kann bei einem erfindungsgemäßen Sprechübertragungssystem erzielt werden, wenn die Steuer- und Verarbeitungseinheit dazu ausgebildet ist, unter den einander zeitlich überlagernden Sprechfunkmeldungen
- diejenige Sprechfunkmeldung, deren Beginn zeitlich früher liegt, zu priorisieren und
- die zumindest eine Sprechfunkmeldung, deren Beginn zeitlich später liegt, im Zwischenspeicher zwischenzuspeichern.

Gemäß einer Variante eines erfindungsgemäßen Sprechübertragungssystems kann vorgesehen sein, dass die Steuer- und Verarbeitungseinheit dazu ausgebildet ist, eine automatisch generierte Sprechnachricht an die Sendeanlagen zu übermittelten.

Um den Fluglotsen darauf hinzuweisen, dass mehrere Sprechfunkmeldungen eingelangt sind, die einander zeitlich überlagert haben, kann vorgesehen sein, dass die Steuer- und Verarbeitungseinheit dazu ausgebildet ist, über den Lautsprecher am Fluglotsenarbeitsplatz vor der Abgabe der zumindest einen zwischengespeicherten Sprechfunkmeldung eine Warnmeldung abzugeben, die auf das zeitlich überlagerte Einlangen der Sprechfunkmeldungen hinweist.

Um bei einem erfindungsgemäßen Sprechübertragungssystem gewährleisten zu können, dass der Fluglotse aktiv das Abspielen von Sprechfunkmeldungen unterbrechen kann, um beispielsweise selbst eine Sprechfunkmeldung abzugeben, kann vorgesehen sein, dass am Fluglotsenarbeitsplatz ein an die Steuer- und Verarbeitungseinheit angeschlossener Push-To-Talk-Button vorgesehen ist, wobei die Steuer- und Verarbeitungseinheit dazu ausgebildet ist, die Abgabe der zwischengespeicherten Sprechfunkmeldung und/oder die Sprechnachricht bei Betätigung des Push-To-Talk-Buttons zu unterbrechen.

Um eine getrennte Wiedergabe einzelner einlangender Sprechfunkmeldungen ohne störende Überlagerung zu gewährleisten, wenn mehrere Sprechfunkmeldungen einander zeitlich überlagernd am Fluglotsenarbeitsplatz eingelangt sind, kann vorgesehen sein, dass die Steuer- und Verarbeitungseinheit dazu ausgebildet ist, sofern an den einzelnen Sende-/Empfangsanlagen einlangende voneinander unterschiedliche Sprechfunkmeldungen einander zeitlich überlagern,
- für jede einlangende Sprechfunkmeldung jeweils diejenige Sende-/Empfangsanlage zu ermitteln, an der die einlangende Sprechfunkmeldung unüberlagert empfangen wird und
- jeweils die über die derart ermittelte Sende-/Empfangsanlage unüberlagert oder mit der besten Qualität empfangene Sprechfunkmeldung an den Fluglotsenarbeitsplatz weiterzuleiten und/oder im Zwischenspeicher zwischenzuspeichern.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben.

Im Folgenden zeigen schematisch:
Fig. 1 ein Ablaufdiagramm einer aus dem Stand der Technik bekannten Vorgehensweise,
Fig. 2 ein Ausführungsbeispiel eines erfindungsgemäßen Sprechübertragungssystems,
Fig. 3 ein Ablaufdiagramm eines ersten Ausführungsbeispiels eines Verfahrens,
Fig. 4 ein Ablaufdiagramm eines zweiten Ausführungsbeispiels eines Verfahrens,
Fig. 5 ein Ablaufdiagramm eines Ausführungsbeispiels eines erfindungsgemäßen Verfahrens,
Fig. 6 ein Ausführungsbeispiel eines erfindungsgemäßen Sprechübertragungssystems bei gleichzeitigem Einlangen mehrerer Sprechfunkmeldungen an derselben Sende-/Empfangsanlage.

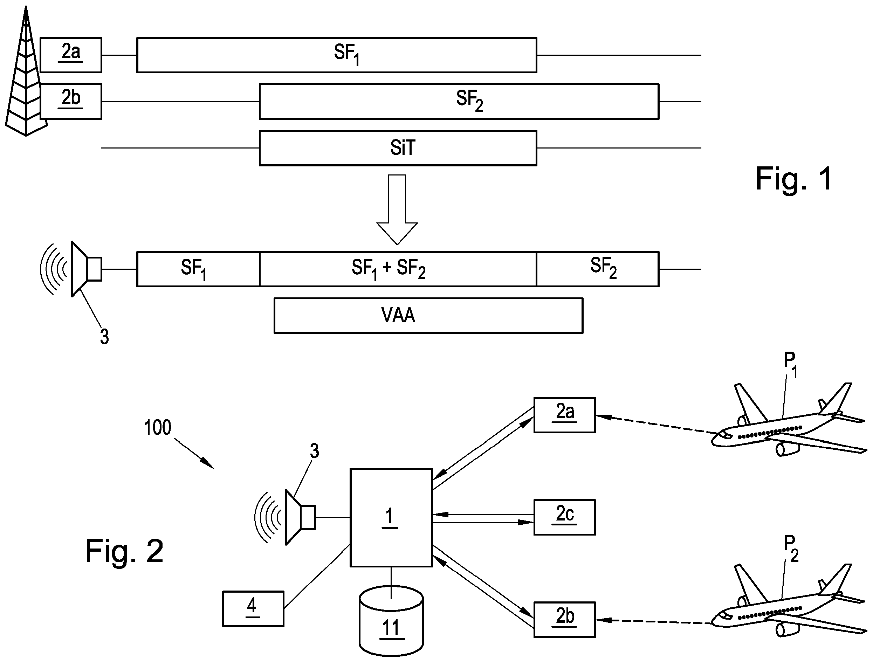

**Fig. 1** zeigt schematisch ein Ablaufdiagramm eines aus dem Stand der Technik bekannten Verfahrens, für den Fall, dass eine Mehrzahl von Sprechfunkmeldungen, einander zeitlich überlagernd, an einem Fluglotsenarbeitsplatz einlangen.

Wie in **Fig. 1** zu erkennen ist, langen am Fluglotsenarbeitsplatz bzw. zwei mit dem Fluglotsenarbeitsplatz verbundenen Sende-/Empfangsanlagen 2a, 2b, zwei Sprechfunkmeldungen SF₁, SF₂ ein, die einander teilweise zeitlich überlagern. Die Übermittlung der von einem ersten Luftfahrzeug P₁ abgegebenen Sprechfunkmeldung SF₁ beginnt im gezeigten Ausführungsbeispiel vor der von einem zweiten Luftfahrzeug P₂ übermittelten Sprechfunkmeldung SF₂. Die Sprechfunkmeldung SF₁ des ersten Luftfahrzeugs P₁ langt dabei an der Sende-/Empfangseinheit 2a ein und die Sprechfunkmeldung SF₂ des zweiten Luftfahrzeugs P₂ an der Sende-/Empfangsanlage 2b.

Dies bedeutet, dass das erste Luftfahrzeug P₁ zwar früher zu übertragen begonnen hat als der zweite, am Fluglotsenarbeitsplatz jedoch in einem gewissen Zeitraum nach dem Beginn der Übermittlung der ersten Sprechfunkmeldung SF₁ eine Überlagerung bzw. Summation der Sprechfunkmeldungen SF₁, SF₂, die an den beiden Sende-/Empfangsanlagen 2a, 2b einlangen, beispielsweise von einem Lautsprecher 3 abgegeben wird. Erst wenn das erste Luftfahrzeug P₁ die Übermittlung seiner Sprechfunkmeldung SF₁ an die Sende-/Empfangsanlage 2a beendet hat, hört der Fluglotse am Fluglotsenarbeitsplatz die ab diesem Zeitpunkt verbleibende Sprechfunkmeldung SF₂ des zweiten Luftfahrzeugs P₂ ohne weitere Überlagerung.

Wie in **Fig. 1** ersichtlicht ist, wird bei dem aus dem Stand der Technik bekannten Verfahren zwar eine derartige simultaneous radio transmission, d.h. ein Einlangen einander zeitlich überlagernder Sprechfunkmeldungen, detektiert und dem Fluglotsen am Fluglotsenarbeitsplatz visuell und/oder akustisch mit einer Anzeige VAA angezeigt, die später beginnende Sprechfunkmeldung SF₂ wird jedoch zur Sprechfunkmeldung SF₁, die früher begonnen hat und bereits am Fluglotsenarbeitsplatz abgegeben wird, dazugemischt.

Dies führt dazu, dass der Fluglotse zwar erkennen kann, dass es sich um zwei verschiedene, einander zeitlich überlagernde, Sprechfunkmeldungen SF₁, SF₂ handelt. Die Summierung der beiden einander überlagernden Sprechfunkmeldungen SF₁, SF₂ macht es jedoch schwierig, die beiden Gespräche auseinander zu halten und jeweils zu verstehen. Darüber hinaus kann es zu einem störenden Echo bei der Abgabe der Sprechfunkmeldungen SF₁, SF₂ über den Lautsprecher 3 kommen.

Das erfindungsgemäße Verfahren bzw. das erfindungsgemäße Sprechübertragungssystem 100 schaffen diesbezüglich Abhilfe. **Fig. 2** zeigt eine schematische Darstellung eines derartigen Sprechübertragungssystems 100. Dieses umfasst, wie in **Fig. 2** dargestellt, eine Anzahl von Sende-/Empfangsanlagen 2a, 2b, 2c, die an einen gemeinsamen Fluglotsenarbeitsplatz angeschlossen sind. Der Fluglotsenarbeitsplatz umfasst dabei zumindest einen Lautsprecher 3 und einen Push-To-Talk-Button 4, wobei über den Lautsprecher 3 Sprechfunkmeldungen SF₁, SF₂, SF abgegeben werden können, die am Fluglotsenarbeitsplatz über die Sende-/Empfangsanlagen 2a, 2b, 2c einlangen.

Das in **Fig. 2** dargestellte Sprechübertragungssystem 100 umfasst weiters eine Steuer- und Verarbeitungseinheit 1, die zwischen die Sende-/Empfangsanlagen 2a, 2b, 2c und den Fluglotsenarbeitsplatz geschaltet ist. Die Steuer- und Verarbeitungseinheit 1 umfasst dabei einen Zwischenspeicher 11 zum Abspeichern von Sprechfunkmeldungen SF, SF₂. Die Steuer- und Verarbeitungseinheit 1 ist weiters dazu ausgebildet, festzustellen, ob über die einzelnen Sende-/Empfangsanlagen 2a, 2b, 2c einlangende, voneinander unterschiedliche, Sprechfunkmeldungen SF, SF₁, SF₂ einander zeitlich überlagern. Dazu wird der zeitliche Ablauf der von den einzelnen Sende-/Empfangsanlagen 2a, 2b, 2c einlangenden Signalisierungsinformationen PTT-type, SQU, PTT-id, PM, PTTS und SCT analysiert und darauf basierend die Entscheidung getroffen, ob es sich um eine einzelne Pilotenaussendung oder um mehrere, einander zeitlich überlagernde Sprechfunkmeldungen handelt. Weitere Informationen zu den genannten Signalisierungsinformationen sind beispielsweise im Standard EUROCAE ED-137/1C zu finden.

Dies bedeutet, dass wenn, wie im gezeigten Beispiel, mehrere Sprechfunkmeldungen SF, SF₁, SF₂ von beispielsweise zwei Luftfahrzeugen P₁, P₂ abgegeben werden und diese Sprechfunkmeldungen SF, SF₁, SF₂ langen an den Sende-/Empfangsanlagen 2a, 2b, 2c ein, so untersucht die Steuer- und Verarbeitungseinheit 1, ob einander diese Sprechfunkmeldungen SF, SF₁, SF₂ zeitlich überlagern.

Wird eine derartige zeitliche Überlagerung mehrerer Sprechfunkmeldungen SF, SF₁, SF₂ von der Steuer- und Verarbeitungseinheit 1 festgestellt, so priorisiert die Steuer- und Verarbeitungseinheit 1 eine der Sende-/Empfangsanlagen 2a, 2b, 2c nach vorgegebenen Kriterien. Diese Priorisierung kann insbesondere nach dem "first come-first serve"-Prinzip, der Sende-/Empfangsanlage der Sprechfunkmeldung erfolgen. Die an der priorisierten Sende-/Empfangsanlage 2a, 2b, 2c empfangene Sprechfunkmeldung SF₁ wird unmittelbar an den Fluglotsenarbeitsplatz weitergeleitet und über den Lautsprecher 3 abgegeben.

Die jeweils zumindest eine nicht an den Fluglotsenarbeitsplatz weitergeleitete Sprechfunkmeldung SF, SF₁, SF₂ wird von der Steuer- und Verarbeitungseinheit 1 im Zwischenspeicher 11 zwischengespeichert. Ist die Abgabe der priorisierten Sprechfunkmeldung SF₁ beendet, bzw. werden keine externen Funksprüche mehr abgegeben, was z. B. daran erkennbar ist, dass am Fluglotsenarbeitsplatz kein Squelch-Signal mehr vorliegt, so wird von der Steuer- und Verarbeitungseinheit 1 die zumindest eine zwischengespeicherte Sprechfunkmeldung SF₂ über den Lautsprecher 3 am Fluglotsenarbeitsplatz abgegeben.

Obwohl in den gezeigten Ausführungsbeispielen der Einfachheit halber jeweils nur zwei einander zeitlich überlagernde Sprechfunkmeldungen SF₁, SF₂ dargestellt sind, ist das erfindungsgemäße Verfahren bzw. ein erfindungsgemäßes Sprechübertragungssystem 100 auch beim Einlangen einer Vielzahl von einander zeitlich überlagernd einlangenden Sprechfunkmeldungen SF anwendbar.

Diese Vorgehensweise ermöglicht es vorteilhafterweise, dass, sobald das Sprechübertragungssystem 100 bzw. die Steuer- und Verarbeitungseinheit 1 des Sprechübertragungssystems 100 den Empfang mehrerer zeitlich überlappender Nachrichten über verschiedene Sende-/Empfangsanlagen 2a, 2b, 2c, d.h. eine simultaneous radio transmission (SiT), erkennt, das Funksignal der betroffenen Sende-/Empfangsanlage nicht unmittelbar zum Fluglotsen durchgeschaltet wird, sondern ein Teil des Funksignals bzw. eine Sprechfunkmeldung SF priorisiert und weitere, diese priorisierte Sprechfunkmeldung zeitlich überlagernde, Sprechfunkmeldungen SF zwischengespeichert und nicht unmittelbar am Fluglotsenarbeitsplatz abgegeben werden.

Dies ermöglicht somit, dass der Fluglotse einzelne Sprechfunkmeldungen SF zeitlich versetzt hört, sodass er sie vollständig erfassen kann, wobei zusätzlich ein störendes Echo vermieden wird.

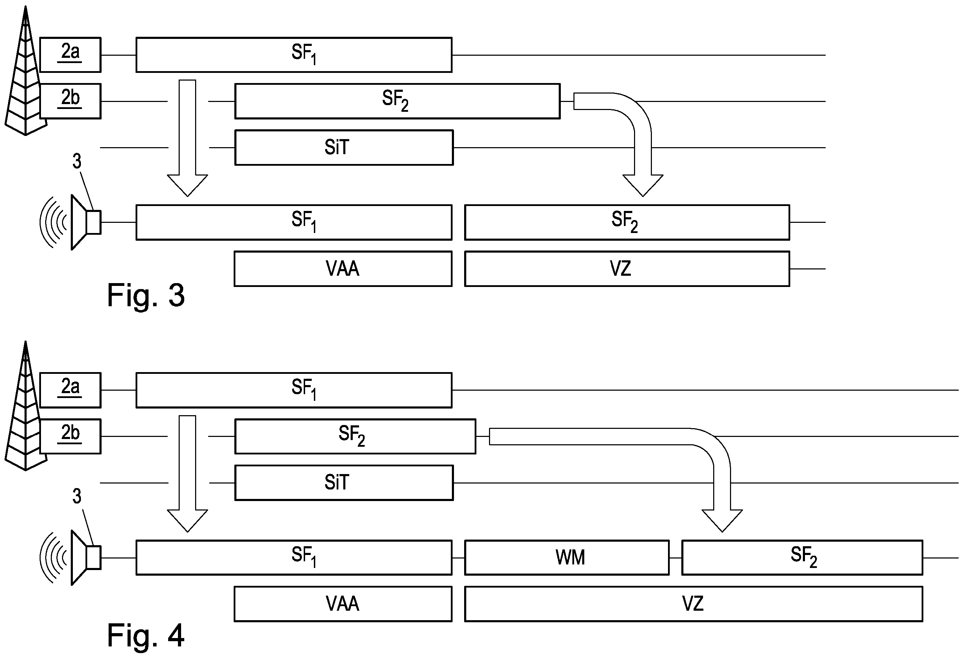

**Fig. 3** zeigt ein erstes Ausführungsbeispiel eines Verfahrens, das mit Hilfe eines zuvor beschriebenen Sprechübertragungssystems 100 durchgeführt werden kann. Wie in **Fig. 3** ersichtlich ist, langen an den beiden mit dem Fluglotsenarbeitsplatz verbundenen Sende-/Empfangsanlagen 2a, 2b zwei Sprechfunkmeldungen SF₁, SF₂ ein, wobei die Sprechfunkmeldung SF₁ zeitlich früher beginnt, als die Sprechfunkmeldung SF₂. Die Sprechfunkmeldung SF₂ dauert dabei jedoch auch noch nach dem Ende der Sprechfunkmeldung SF₁ an.

Dies bedeutet, dass es in einem Zeitraum nach dem Beginn der Übermittlung der Sprechfunkmeldung SF₁ zu einer Überlagerung der beiden Sprechfunkmeldungen SF₁, SF₂ kommt, bis die erste Sprechfunkmeldung SF₁ vollständig abgegeben ist. D.h. es werden mehrere zeitlich überlappende Nachrichten über denselben Funkkanal empfangen, was im gezeigten Ausführungsbeispiel mit dem Bezugszeichen SiT gekennzeichnet ist.

Im gezeigten Ausführungsbeispiel ist die Steuer- und Verarbeitungseinheit 1 des Sprechübertragungssystems 100 dazu ausgebildet, unter den einander zeitlich überlagernden Sprechfunkmeldungen SF₁, SF₂ diejenige Sprechfunkmeldung zu priorisieren, deren Beginn zeitlich früher liegt. Dabei handelt es sich im gezeigten Ausführungsbeispiel um die Sprechfunkmeldung SF₁.

Im gezeigten Ausführungsbeispiel wird die erste Sprechfunkmeldung SF₁ priorisiert und die zweite Sprechfunkmeldung SF₂, d.h. diejenige Sprechfunkmeldung, deren Beginn zeitlich später liegt, wird im Zwischenspeicher 11 zwischengespeichert. Ist die priorisierte Sprechfunkmeldung SF₁ am Fluglotsenarbeitsplatz vollständig ohne weitere Zeitverzögerung abgegeben, so wird anschließend die zwischengespeicherte Sprechfunkmeldung SF₂ am Fluglotsenarbeitsplatz abgespielt.

Wie in **Fig. 3** ersichtlich ist, erfolgt, sobald von der Steuer- und Verarbeitungseinheit 1 eine simultaneous radio transmission SIT detektiert wird, am Fluglotsenarbeitsplatz zusätzlich eine visuelle und/oder akustische Anzeige VAA, dass einander zeitlich überlagernde Sprechfunkmeldungen SF₁, SF₂ an den Sende-/Empfangsanlagen 2a, 2b einlangen, während die priorisierte Sprechfunkmeldung SF₁ abgegeben wird. Während im Anschluss an die priorisierte Sprechfunkmeldung SF₁ die zwischengespeicherte Sprechfunkmeldung SF₂ abgegeben wird, erfolgt im gezeigten Ausführungsbeispiel eine visuelle Anzeige VZ am Fluglotsenarbeitsplatz, die darauf hinweist, dass eine zwischengespeicherte Sprechfunkmeldung wiedergegeben wird.

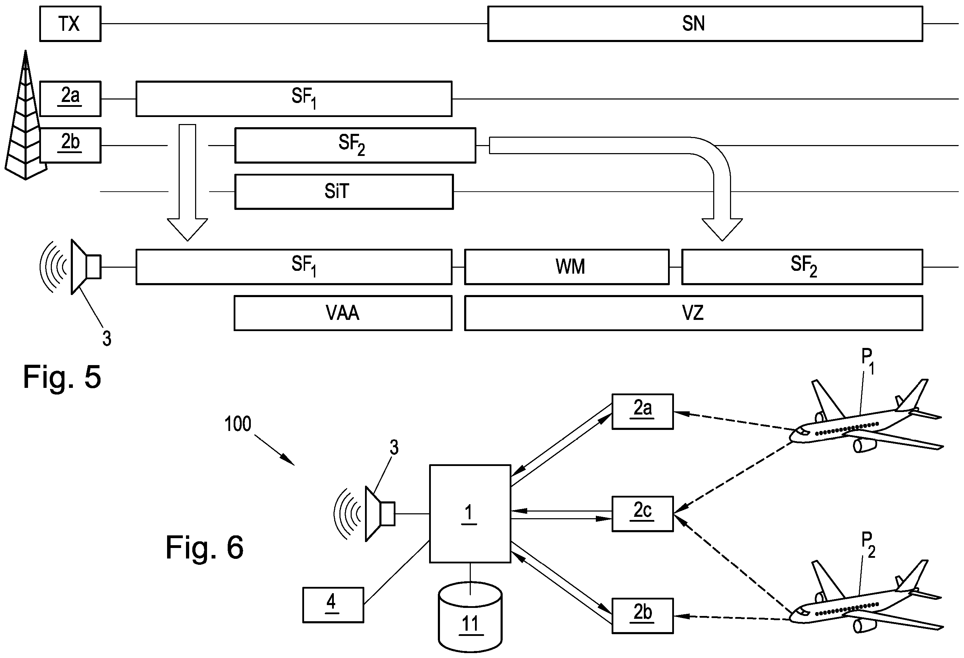

Optional kann, falls mehr als zwei einander zeitlich überlagernde Sprechfunkmeldungen SF₁, SF₂ an den Sende-/Empfangsanlagen 2a, 2b, 2c (Fig. 6) und evtl. weiteren Sende-/Empfangsanlagen einlangen, mehrere Sprechfunkmeldungen separat zwischengespeichert werden, deren Beginn z.B. zeitlich später liegt als der Beginn der priorisierten Sprechfunkmeldung. In diesem Fall können die zwischengespeicherten Sprechfunkmeldungen hintereinander, beispielsweise in Reihenfolge ihres zeitlichen Beginns, nach dem Ende der priorisierten Sprechfunkmeldung SF₁ am Fluglotsenarbeitsplatz über den Lautsprecher 3 abgegeben werden.

**Fig. 4** zeigt ein zweites Ausführungsbeispiel eines Verfahrens, das dem in Fig 3 dargestellten, ersten Ausführungsbeispiel mit folgenden Änderungen entspricht. Wie bereits in **Fig. 3** dargestellt, langen zwei Sprachfunkmeldungen SF₁, SF₂ einander zeitlich überlagernd an den Sende-/Empfangsanlagen 2a, 2b eines Fluglotsenarbeitsplatzes ein.

Zusätzlich zur bereits zuvor beschriebenen Vorgangsweise ist im gezeigten Ausführungsbeispiel die Steuer- und Verarbeitungseinheit 1 des Sprechübertragungssystems 100 dazu ausgebildet, über den Lautsprecher 3 am Fluglotsenarbeitsplatz vor der Abgabe der zumindest einen zwischengespeicherten Sprechfunkmeldung SF₁ eine Warnmeldung WM abzugeben.

Diese Warnmeldung WM dient dazu, den Fluglotsen darauf aufmerksam zu machen, dass die nachfolgend abgegebene Sprechfunkmeldung SF₂ gleichzeitig mit der bereits zuvor abgegebenen priorisierten Sprechfunkmeldung SF₁ eingelangt ist und somit zwischengespeichert war. Wie bereits im ersten Ausführungsbeispiel dargestellt, erfolgt während der Abgabe der priorisierten Sprechfunkmeldung SF₁ eine visuelle und/oder akustische Anzeige VAA dafür, dass mehrere Sprechfunkmeldungen einander zeitlich überlagernd einlangen. Anschließend an das Ende der priorisierten Sprechfunkmeldung SF₁ wird die Warnmeldung WM abgegeben bevor die zwischengespeicherte Sprechfunkmeldung SF₂ am Fluglotsenarbeitsplatz abgegeben wird. Während der Abgabe der Warnmeldung WM und der Sprechfunkmeldung SF₂ erfolgt am Fluglotsenarbeitsplatz eine visuelle Anzeige VZ, die darauf hinweist, dass es sich um eine zwischengespeicherte Sprechfunkmeldung handelt. Bei dieser Warnmeldung handelt es sich um eine voraufgezeichnete bzw. automatisch generierte und für den Menschen verständliche Ansage.

**Fig. 5** zeigt ein Ausführungsbeispiel eines erfindungsgemäßen Verfahrens, das bis auf die folgenden Änderungen dem 2. Ausführungsbeispiel entspricht. Wie bereits zuvor dargestellt, langen zwei Sprechfunkmeldungen SF₁, SF₂ am Fluglotsenarbeitsplatz einander zeitlich überlagernd ein. Zusätzlich zur im zweiten Ausführungsbeispiel in **Fig. 4** dargestellten Vorgehensweise ist im Ausführungsbeispiel eines erfindungsgemäßen Verfahrens die Steuer- und Verarbeitungseinheit 1 des Sprechübertragungssystems 100 dazu ausgebildet, während des Zeitraums nach dem Ende der priorisierten Sprechfunkmeldung SF₁ über die Sende-/Empfangsanlagen 2a, 2b, 2c eine automatisch generierte Sprechnachricht SN an die Sendeanlagen, d.h. beispielsweise an alle Luftfahrzeuge P₁, P₂ zu übermitteln.

Diese automatisch generierte Sprechnachricht SN dauert zumindest so lange an, bis die zumindest eine zwischengespeicherte Sprechfunkmeldung SF₂ vollständig abgegeben ist oder durch den Fluglotsen durch die Abgabe einer eigenen Sprechfunkmeldung SF unterbrochen wurde. Diese Sprechnachricht SN dient dazu, die Piloten darüber zu informieren, dass der Fluglotse gerade mit dem Abhören der Sprechfunkmeldungen beschäftigt ist und um weitere Funksprüche der Piloten zu vermeiden, während der Fluglotse die zwischengespeicherte Sprechfunkmeldung SF₂ hört bzw. die zwischengespeicherte Sprechfunkmeldung SF₂ über den Lautsprecher 3 am Fluglotsenarbeitsplatz abgegeben wird.

Wie in **Fig. 2** dargestellt ist, umfasst der Fluglotsenarbeitsplatz eines erfindungsgemäßen Sprechübertragungssystems 100 einen Push-To-Talk-Button 4, der an die Steuer- und Verarbeitungseinheit 1 angeschlossen ist. Die Steuer- und Verarbeitungseinheit 1 unterbricht bei Betätigung des Push-To-Talk-Buttons 4 die Abgabe der zwischengespeicherten Sprechfunkmeldung SF₂ und/oder die Sprechnachricht SN. Auf diese Weise kann der Fluglotse jederzeit in die Abgabe von Sprechfunkmeldungen SF eingreifen, um beispielsweise auf aktuelle Situationen zu reagieren und beispielsweise Anweisungen zu geben.

Optional kann bei einem derartigen Verfahren auch ein Zeitlimit eingesetzt werden, um durch überlange Funksprüche den üblichen Ablauf des Funkverlaufs am Fluglotsenarbeitsplatz nicht länger als für einen vorgegebenen Zeitraum zu blockieren. In diesem Fall kann die Steuer- und Verarbeitungseinheit 1 beispielsweise dazu ausgebildet sein, die Abgabe von zwischengespeicherten Sprechfunkmeldungen abzubrechen, sobald ein zeitlicher Schwellenwert erreicht ist.

Wie in **Fig. 6** dargestellt ist, kann die Steuer- und Verarbeitungseinheit 1 dazu ausgebildet sein, sofern an den einzelnen Sende-/Empfangsanlagen 2a, 2b, 2c einlangende voneinander unterschiedliche Sprechfunkmeldungen SF, SF₁, SF₂ einander zeitlich überlagern, für jede einlangende Sprechfunkmeldung SF jeweils diejenige Sende-/Empfangsanlage 2a, 2b, 2c zu ermitteln, an der die einlangende Sprechfunkmeldung SF unüberlagert oder mit der besten Übertragungsqualität empfangen wird. Eine solche Qualitätsbewertung der Übertragungsqualität sowie die Detektion von überlagerten Sprechfunkmeldungen ist beispielsweise im Standard EUROCAE ED-137/1C näher beschrieben. Der Fluglotsenarbeitsplatz eines derartigen erfindungsgemäßen Sprechübertragungssystems 100 umfasst wie im in Fig. 2 dargestellten Ausführungsbeispiel einen Push-To-Talk-Button 4, der an die Steuer- und Verarbeitungseinheit 1 angeschlossen ist.

Dies ist besonders vorteilhaft, da Sende-/Empfangsanlagen 2a, 2b, 2c meist geographisch so platziert sind, dass der Funkspruch eines Luftfahrzeuges P₁ bzw. P₂ von mehr als einer einzigen Sende-/Empfangsanlage 2a, 2b, 2c empfangen wird. Bei gleichzeitigen Funksprüchen von zwei Luftfahrzeuges P₁, P₂ können die Sende-/Empfangsanlage 2a, 2b, 2c daher je nach eigenem Standort und Position des Luftfahrzeuges P₁, P₂ entweder nur das Funkgesprächs eines einzigen Luftfahrzeuges P₁, P₂ empfangen oder eine Überlagerung beider Funkgespräche. Daher wird für jede einlangende Sprechfunkmeldung SF diejenige Sende-/Empfangsanlage 2a, 2b, 2c ermittelt, an der möglichst nur jeweils eine einzige Sprechfunkmeldung SF empfangen wird und somit ohne störendes Echo oder Frequenzüberlagerungen entweder priorisiert an den Fluglotsenarbeitsplatz weitergeleitet und über den Lautsprecher 3 abgegeben oder im Zwischenspeicher 11 zwischengespeichert werden kann.

## Patentansprüche

1. Verfahren zur Erkennung und Wiedergabe von einer Mehrzahl von Sendern über Funk abgegebenen Sprechfunkmeldungen (SF; SF₁, SF₂) an einem Fluglotsenarbeitsplatz, wobei untersucht wird, ob einander mehrere am Fluglotsenarbeitsplatz einlangende Sprechfunkmeldungen (SF; SF₁, SF₂) zeitlich überlagern, und in diesem Fall
- eine der Sprechfunkmeldungen (SF; SF₁, SF₂) priorisiert und unmittelbar am Fluglotsenarbeitsplatz abgegeben wird,
- die zumindest eine andere Sprechfunkmeldung zwischengespeichert wird, und
- die zumindest eine zwischengespeicherte Sprechfunkmeldung (SF₂) nach dem Ende der priorisierten Sprechfunkmeldung (SF₁) am Fluglotsenarbeitsplatz abgegeben wird.
**dadurch gekennzeichnet,**
**dass** während des Zeitraums nach dem Ende der priorisierten und/oder aller überlagert einlangenden Sprechfunkmeldungen (SF₁, SF₂) eine Sprechnachricht (SN) an alle Sender übermittelt wird, die zumindest so lange andauert, bis die zumindest eine zwischengespeicherte Sprechfunkmeldung (SF₂) am Fluglotsenarbeitsplatz abgegeben ist.

2. Verfahren nach Anspruch 1, **dadurch gekennzeichnet, dass** diejenige Sprechfunkmeldung (SF₁), deren Beginn zeitlich früher liegt, priorisiert wird und die zumindest eine jeweils später beginnende Sprechfunkmeldung (SF₂) zwischengespeichert wird.

3. Verfahren nach Anspruch 1 oder 2, **dadurch gekennzeichnet, dass** eine automatisch generierte Sprechnachricht (SN) an alle Sender übermittelt wird.

4. Verfahren nach einem der vorangehenden Ansprüche, **dadurch gekennzeichnet, dass** am Fluglotsenarbeitsplatz vor dem Abspielen der zumindest einen zwischengespeicherten Sprechfunkmeldung (SF₂) eine Warnmeldung (WM) abgegeben wird, die auf das zeitlich überlagerte Einlangen der Sprechfunkmeldungen (SF₁, SF₂) hinweist.

5. Verfahren nach einem der vorangehenden Ansprüche, **dadurch gekennzeichnet, dass** das Abspielen der zumindest einen zwischengespeicherten Sprechfunkmeldung (SF₂) und/oder die Sprechnachricht (SN) unterbrochen werden, wenn am Fluglotsenarbeitsplatz (1) ein Push-To-Talk-Button (4) betätigt wird.

6. Verfahren nach einem der vorangehenden Ansprüche, **dadurch gekennzeichnet, dass** sofern an den einzelnen Sende-/Empfangsanlagen (2a, 2b, 2c) einlangende voneinander unterschiedliche Sprechfunkmeldungen (SF; SF₁, SF₂) einander zeitlich überlagern,
- für jede einzelne einlangende Sprechfunkmeldung (SF; SF₁, SF₂) jeweils diejenige Sende-/Empfangsanlage (2a, 2b, 2c) ermittelt wird, an der die einlangende Sprechfunkmeldung (SF; SF₁, SF₂) unüberlagert oder mit der besten Qualität empfangen wird und
- jeweils die über die derart ermittelte Sende-/Empfangsanlage (2a, 2b, 2c) unüberlagert empfangene Sprechfunkmeldung (SF; SF₁, SF₂) an den Lotsenarbeitsplatz weitergeleitet und/oder in einem Zwischenspeicher (11) zwischengespeichert wird.

7. Sprechübertragungssystem (100) umfassend
- eine Anzahl von Sende-/Empfangsanlagen (2a, 2b, 2c), die an einen gemeinsamen Lotsenarbeitsplatz angeschlossen sind, wobei der Lotsenarbeitsplatz zumindest einen Lautsprecher (3) zur Abgabe von Sprechfunkmeldungen (SF; SF₁, SF₂) aufweist, und
- eine Steuer- und Verarbeitungseinheit (1), die zwischen die Sende-/Empfangsanlagen (2a, 2b, 2c) und den Fluglotsenarbeitsplatz geschaltet ist, umfassend einen Zwischenspeicher (11) zum Abspeichern von Sprechfunkmeldungen (SF; SF₁, SF₂), wobei die Steuer- und Verarbeitungseinheit (1) dazu ausgebildet ist,
- festzustellen, ob über die einzelnen Sende-/Empfangsanlagen (2a, 2b, 2c) einlangende voneinander unterschiedliche Sprechfunkmeldungen (SF; SF₁, SF₂) einander zeitlich überlagern, und sofern ein zeitliches Überlagern mehrerer Sprechfunkmeldungen (SF) festgestellt wird,
- eine der Sende-/Empfangsanlagen (2a, 2b, 2c) zu priorisieren, und die jeweilige Sprechfunkmeldung (SF₁) unmittelbar an den Fluglotsenarbeitsplatz weiterzuleiten und über den Lautsprecher (3) abzugeben,
- die zumindest eine nicht an den Fluglotsenarbeitsplatz weitergeleitete Sprechfunkmeldung (SF₂) im Zwischenspeicher (11) zwischenzuspeichern und
- die zumindest eine zwischengespeicherte Sprechfunkmeldung (SF₂) nach dem Ende der priorisierten Sprechfunkmeldung (SF₁) über den Lautsprecher (3) am Fluglotsenarbeitsplatz abzugeben.
**dadurch gekennzeichnet,**
**dass** die Steuer- und Verarbeitungseinheit (1) dazu ausgebildet ist, während des Zeitraums nach dem Ende der priorisierten und/oder aller überlagert einlangenden Sprechfunkmeldungen (SF₁, SF₂) über die Sende-/Empfangsanlagen (2a, 2b, 2c) eine Sprechnachricht (SN) an die Sendeanlagen zu übermittelten, wobei die Sprechnachricht (SN) zumindest so lange andauert, bis die zumindest eine zwischengespeicherte Sprechfunkmeldung (SF₂) abgegeben ist.

8. Sprechübertragungssystem (100) nach Anspruch 7, **dadurch gekennzeichnet, dass** die Steuer- und Verarbeitungseinheit (1) dazu ausgebildet ist, unter den einander zeitlich überlagernden Sprechfunkmeldungen (SF; SF₁, SF₂)
- diejenige Sprechfunkmeldung (SF₁), deren Beginn zeitlich früher liegt, zu priorisieren und
- die zumindest eine Sprechfunkmeldung (SF₂), deren Beginn zeitlich später liegt, im Zwischenspeicher (11) zwischenzuspeichern.

9. Sprechübertragungssystem (100) nach Anspruch 7 oder 8, **dadurch gekennzeichnet, dass** die Steuer- und Verarbeitungseinheit (1) dazu ausgebildet ist, eine automatisch generierte Sprechnachricht (SN) an die Sendeanlagen zu übermittelten.

10. Sprechübertragungssystem (100) nach einem der Ansprüche 7 bis 9, **dadurch gekennzeichnet, dass** die Steuer- und Verarbeitungseinheit (1) dazu ausgebildet ist, über den Lautsprecher (3) am Fluglotsenarbeitsplatz vor der Abgabe der zumindest einen zwischengespeicherten Sprechfunkmeldung (SF₂) eine Warnmeldung (WM) abzugeben, die auf das zeitlich überlagerte Einlangen der Sprechfunkmeldungen (SF₁, SF₂) hinweist.

11. Sprechübertragungssystem nach einem der Ansprüche 7 bis 10, **dadurch gekennzeichnet, dass** am Fluglotsenarbeitsplatz ein an die Steuer- und Verarbeitungseinheit (1) angeschlossener Push-To-Talk-Button (4) vorgesehen ist, wobei die Steuer- und Verarbeitungseinheit (1) dazu ausgebildet ist, die Abgabe der zwischengespeicherten Sprechfunkmeldung (SF₂) und/oder die Sprechnachricht (SN) bei Betätigung des Push-To-Talk-Buttons (4) zu unterbrechen.

12. Sprechübertragungssystem (100) nach einem der Ansprüche 7 bis 11, **dadurch gekennzeichnet, dass** die Steuer- und Verarbeitungseinheit (1) dazu ausgebildet ist, sofern an den einzelnen Sende-/Empfangsanlagen (2a, 2b, 2c) einlangende voneinander unterschiedliche Sprechfunkmeldungen (SF; SF₁, SF₂) einander zeitlich überlagern,
- für jede einlangende Sprechfunkmeldung (SF; SF₁, SF₂) jeweils diejenige Sende-/Empfangsanlage (2a, 2b, 2c) zu ermitteln, an der die einlangende Sprechfunkmeldung (SF; SF₁, SF₂) unüberlagert empfangen wird und
- jeweils die über die derart ermittelte Sende-/Empfangsanlage (2a, 2b, 2c) unüberlagert oder mit der besten Qualität empfangene Sprechfunkmeldung (SF; SF₁, SF₂) an den Fluglotsenarbeitsplatz weiterzuleiten und/oder im Zwischenspeicher (11) zwischenzuspeichern.

## Claims

1. Method for the detection and reproduction of speech radio messages (SF; SF₁, SF₂) outputted via wireless radio signals from a plurality of transmitters at an air traffic controller workplace, wherein it is investigated whether several speech radio messages (SF; SF₁, SF₂) incoming to the air traffic controller workplace superimpose one another temporally, and in this case
- one of the speech radio messages (SF; SF₁, SF₂) is prioritised and outputted immediately at the air traffic controller workplace,
- the at least one other speech radio message is intermediately stored, and
- the at least one intermediately stored speech radio message (SF₂) is outputted at the air traffic controller workplace after the end of the prioritised speech radio message (SF₁).
**characterised in that**
during the time period after the end of the prioritised and/or all superimposed incoming speech radio messages (SF₁, SF₂) a speech message (SN) is transmitted to all transmitters, which lasts at least until the at least one intermediately stored speech radio message (SF₂) is outputted at the air traffic controller workplace.

2. Method according to claim 1, **characterised in that** the speech radio message (SF₁), the start of which is earlier in time, is priorities, and the at least one respectively later starting speech radio message (SF₂) is intermediately stored.

3. Method according to claim 1 or 2, **characterised in that** an automatically generated speech message (SN) is transmitted to all transmitters.

4. Method according to any of the preceding claims, **characterised in that** at the air traffic controller workplace, prior to the outputting of the at least one intermediately stored speech radio message (SF₂) a warning signal (WM) is outputted, which advises of the temporally superimposed entrance of the speech radio messages (SF₁, SF₂).

5. Method according to any of the preceding claims, **characterised in that** the outputting of the at least one intermediately stored speech radio message (SF₂) and/or the speech message (SN) is interrupted when a push-to-talk button (4) at the air traffic controller workplace (1) is actuated.

6. Method according to any of the preceding claims, **characterised in that** insofar as speech radio messages (SF; SF₁, SF₂) which are different from one another and which are incoming at the individual transmitting/receiving systems (2a, 2b, 2c) superimpose one another temporally,
- for each individual incoming speech radio message (SF; SF₁, SF₂) in each case the transmitting/receiving system (2a, 2b, 2c) is determined at which the incoming speech radio message (SF; SF₁, SF₂) is received in a non-superimposed manner or with the best quality,
- in each case the speech radio message (SF; SF₁, SF₂) which is received in a non-superimposed manner via the transmitting/receiving system (2a, 2b, 2c) determined in this manner is forwarded to the air traffic controller workplace and/or is intermediately stored in an intermediate store (11).

7. Speech transmission system (100) comprising
- a number of transmitting/receiving systems (2a, 2b, 2c), which are connected to a common air traffic controller workplace, wherein the air traffic controller workplace has at least one loudspeaker (3) for outputting speech radio messages (SF; SF₁, SF₂), and
- a controlling and processing unit (1) which is connected between the transmitting/receiving systems (2a, 2b, 2c) and the air traffic controller workplace, comprising an intermediate store (11) for storing speech radio messages (SF; SF₁, SF₂), wherein the controlling and processing unit (1) is configured
- to determine whether speech radio messages (SF; SF₁, SF₂) which are different from one another and which are incoming at the individual transmitting/receiving systems (2a, 2b, 2c) superimpose one another temporally, and insofar as a temporal superimposition of several speech radio messages (SF) is determined,
- to prioritise one of the transmitting/receiving systems (2a, 2b, 2c), and to forward the respective speech radio message (SF₁) immediately to the air traffic controller workplace and to output it via the loudspeaker (3),
- to intermediately store in the intermediate store (11) the at least one speech radio message (SF₂) which has not been forwarded to the air traffic controller workplace and
- to output the at least one intermediately stored speech radio message (SF₂) after the end of the prioritised speech radio message (SF₁) via the loudspeaker (3) at the air traffic controller workplace.
**characterised in that**
the controlling and processing unit (1) is configured, during the time period after the end of the prioritised and/or all speech radio messages (SF₁, SF₂) incoming and superimposed manner, to transmit via the transmitting/receiving systems (2a, 2b, 2c) a speech message (SN) to the transmitting systems, wherein the speech message (SN) lasts at least until the at least one intermediately stored speech radio message (SF₂) is outputted.

8. Speech transmission system (100) according to claim 7, **characterised in that** the controlling and processing unit (1) is configured, from the speech radio messages (SF; SF₁, SF₂) which are temporally superimposed on one another,
- to prioritise the speech radio message (SF₁), the beginning of which is earlier in time, and
- to intermediately store in the intermediate store (11) the at least one speech radio message (SF₂), the beginning of which is later in time.

9. Speech transmission system (100) according to claim 7 or 8, **characterised in that** the controlling and processing unit (1) is configured to transmit an automatically generated speech message (SN) to the transmitting systems.

10. Speech transmission system (100) according to any of claims 7 to 9, **characterised in that** the controlling and processing unit (1) is configured to output via the loudspeaker (3) at the air traffic controller workplace, prior to the outputting of the at least one intermediately stored speech radio message (SF₂), a warning signal (WM), which advises of the temporally superimposed incoming of the speech radio messages (SF₁, SF₂).

11. Speech transmission system (100) according to any of claims 7 to 10, **characterised in that** at the air traffic controller workplace is provided a push-to-talk button (4) attached to the controlling and processing unit (1), wherein the controlling and processing unit (1) is configured to interrupt the outputting of the intermediately--- stored speech radio message (SF₂) and/or the speech message (SN) when the push-to-talk button (4) is actuated.

12. Speech transmission system (100) according to any of claims 7 to 11, **characterised in that** the controlling and processing unit (1) is configured, insofar as speech radio messages (SF; SF₁, SF₂) which are different from one another and which are incoming at the individual transmitting/receiving systems (2a, 2b, 2c) are temporally superimposed on one another,
- to determine for each incoming speech radio message (SF; SF₁, SF₂) in each case the transmitting/receiving system (2a, 2b, 2c) at which the incoming speech radio message (SF; SF₁, SF₂) is received in a non-superimposed manner, and
- to forward in each case the speech radio message (SF; SF₁, SF₂) received via the transmitting/receiving system (2a, 2b, 2c) determined in this manner in a non-superimposed manner or with the best quality to the air traffic controller workplace and/or to store it intermediately in the intermediate store (11).

## Revendications

1. Procédé de détection et de lecture de messages radiotéléphoniques (SF ; SF₁, SF₂) transférés par radio via une pluralité d'émetteurs au niveau d'un poste de travail de contrôleur aérien, dans lequel il est examiné si plusieurs messages radiotéléphoniques (SF ; SF₁, SF₂) arrivant au poste de travail de contrôleur aérien se superposent dans le temps, et dans ce cas
- l'un des messages radiotéléphoniques (SF ; SF₁, SF₂) est priorisé et transféré directement au poste de travail de contrôleur aérien,
- l'au moins un autre message radiotéléphonique est mis en mémoire tampon,
et
- l'au moins un message radiotéléphonique (SF₂) mis en mémoire tampon est transféré au poste de travail de contrôleur aérien après la fin du message radiotéléphonique priorisé (SF₁),
**caractérisé en ce que,**
pendant la période suivant la fin des messages radiotéléphoniques priorisés et/ou de tous les messages radiotéléphoniques (SF₁, SF₂) arrivant de manière superposée, est transmis à tous les émetteurs un message vocal (SN) qui dure au moins jusqu'à ce que l'au moins un message radiotéléphonique (SF₂) mis en mémoire tampon soit délivré au poste de travail de contrôleur aérien.

2. Procédé selon la revendication 1, **caractérisé en ce que** le message radiotéléphonique (SF₁) dont le début se situe plus tôt dans le temps est priorisé et l'au moins un message radiotéléphonique (SF₂) commençant respectivement plus tard est mis en mémoire tampon.

3. Procédé selon la revendication 1 ou 2, **caractérisé en ce qu'**un message vocal (SN) généré automatiquement est transmis à tous les émetteurs.

4. Procédé selon l'une quelconque des revendications précédentes, **caractérisé en ce que**, avant la lecture de l'au moins un message radiotéléphonique (SF₂) mis en mémoire tampon, est transféré au poste de travail de contrôleur aérien un message d'avertissement (WM) qui signale l'arrivée superposée dans le temps des messages radiotéléphoniques (SF₁, SF₂).

5. Procédé selon l'une quelconque des revendications précédentes, **caractérisé en ce que** la lecture de l'au moins un message radiotéléphonique (SF₂) mis en mémoire tampon et/ou du message vocal (SN) sont interrompus lorsqu'un bouton Push-To-Talk (4) est actionné au niveau du poste de travail de contrôleur aérien (1).

6. Procédé selon l'une quelconque des revendications précédentes, **caractérisé en ce que**, dans la mesure où des messages radiotéléphoniques (SF ; SF₁, SF₂) différents les uns des autres arrivant au niveau des installations d'émission/réception (2a, 2b, 2c) individuelles se superposent dans le temps,
- pour chaque message radiotéléphonique (SF ; SF₁, SF₂) individuel arrivant, est respectivement déterminée l'installation d'émission/réception (2a, 2b, 2c), au niveau de laquelle le message radiotéléphonique (SF ; SF₁, SF₂) arrivant est reçu de manière non superposée ou avec la meilleure qualité et
- le message radiotéléphonique (SF ; SF₁, SF₂) reçu de manière non superposée via l'installation d'émission/réception (2a, 2b, 2c) ainsi déterminée est transmis au poste de travail de contrôleur aérien et/ou est mis en mémoire tampon dans une mémoire tampon (11).

7. Système de transmission vocale (100) comprenant
- un certain nombre d'installations d'émission/réception (2a, 2b, 2c) qui sont raccordées à un poste de travail de contrôleur aérien commun, dans lequel le poste de travail de contrôleur aérien présente au moins un haut-parleur (3) pour l'émission de messages radiotéléphoniques (SF ; SF₁, SF₂), et
- une unité de commande et de traitement (1) qui est montée entre les installations d'émission/réception (2a, 2b, 2c) et le poste de travail de contrôleur aérien, comprenant une mémoire tampon (11) pour enregistrer des messages radiotéléphoniques (SF ; SF₁, SF₂), dans lequel l'unité de commande et de traitement (1) est conçue pour
- constater si des messages radiotéléphoniques (SF ; SF₁, SF₂) différents les uns des autres arrivant via les installations d'émission/réception (2a, 2b, 2c) individuelles se superposent dans le temps, et dans la mesure où une superposition dans le temps de plusieurs messages radiotéléphoniques (SF) est constatée,
- prioriser l'une des installations d'émission/réception (2a, 2b, 2c) et transmettre le message radiotéléphonique (SF₁) respectif directement au poste de travail de contrôleur aérien et le délivrer via le haut-parleur (3),
- mettre en mémoire tampon dans la mémoire tampon (11) l'au moins un message radiotéléphonique (SF₂) qui n'a pas été transmis au poste de travail de contrôleur aérien et
- délivrer au niveau du poste de travail de contrôleur aérien, via le haut-parleur (3), l'au moins un message radiotéléphonique (SF₂) mis en mémoire tampon après la fin du message radiotéléphonique (SF₁) priorisé
**caractérisé en ce que**
l'unité de commande et de traitement (1) est conçue pour transmettre un message vocal (SN) aux installations d'émission via les installations d'émission/réception (2a, 2b, 2c) pendant la période suivant la fin des messages radiotéléphoniques priorisés et/ou de tous les messages radiotéléphoniques (SF₁, SF₂) arrivant de manière superposée, dans lequel le message vocal (SN) dure au moins jusqu'à ce que l'au moins un message radiotéléphonique (SF₂) mis en mémoire tampon soit délivré.

8. Système de transmission vocale (100) selon la revendication 7, **caractérisé en ce que** l'unité de commande et de traitement (1) est conçue pour, parmi les messages radiotéléphoniques (SF ; SF₁, SF₂) qui se superposent dans le temps,
- prioriser le message radiotéléphonique (SF₁) dont le début se situe plus tôt dans le temps, et
- mettre en mémoire tampon dans la mémoire tampon (11) l'au moins un message radiotéléphonique (SF₂) dont le début se situe plus tard dans le temps.

9. Système de transmission vocale (100) selon la revendication 7 ou 8, **caractérisé en ce que** l'unité de commande et de traitement (1) est conçue pour transmettre un message vocal (SN) généré automatiquement aux installations d'émission.

10. Système de transmission vocale (100) selon l'une quelconque des revendications 7 à 9, **caractérisé en ce que** l'unité de commande et de traitement (1) est conçue pour délivrer via le haut-parleur (3) au poste de travail de contrôleur aérien, avant l'émission de l'au moins un message radiotéléphonique (SF₂) mis en mémoire tampon, un message d'avertissement (WM) qui signale l'arrivée superposée dans le temps des messages radiotéléphoniques (SF₁, SF₂).

11. Système de transmission vocale selon l'une quelconque des revendications 7 à 10, **caractérisé en ce qu'**est prévu au niveau du poste de travail de contrôleur aérien un bouton Push-To-Talk (4) raccordé à l'unité de commande et de traitement (1), dans lequel l'unité de commande et de traitement (1) est conçue pour interrompre l'émission du message radiotéléphonique (SF₂) mis en mémoire tampon et/ou le message vocal (SN) en cas d'actionnement du bouton Push-To-Talk (4).

12. Système de transmission vocale (100) selon l'une quelconque des revendications 7 à 11, **caractérisé en ce que** l'unité de commande et de traitement (1) est conçue pour, dans la mesure où des messages radiotéléphoniques (SF ; SF₁, SF₂) différents les uns des autres arrivant au niveau des installations d'émission/réception (2a, 2b, 2c) individuelles se superposent dans le temps,
- déterminer, pour chaque message radiotéléphonique (SF ; SF₁, SF₂) arrivant, l'installation d'émission/réception (2a, 2b, 2c) respective au niveau de laquelle le message radiotéléphonique (SF ; SF₁, SF₂) arrivant est reçu de manière non superposée et
- transmettre au poste de travail de contrôleur aérien et/ou mettre en mémoire tampon dans la mémoire tampon (11) le message radiotéléphonique (SF ; SF₁, SF₂) reçu de manière non superposée ou avec la meilleure qualité via l'installation d'émission/réception (2a, 2b, 2c) ainsi déterminée.
